# EUROPEAN PATENT SPECIFICATION

(11) **EP 4 449 528 B1**
(45) Date of publication and mention of the grant of the patent: **20.05.2026**
(21) Application number: 21839463.3
(22) Date of filing: 15.12.2021
(51) Int. Cl.: H01M 8/04537, H01M 8/04701

(54) **A METHOD FOR CONTROLLING A FUEL CELL SYSTEM**
VERFAHREN ZUR STEUERUNG EINES BRENNSTOFFZELLENSYSTEMS
PROCÉDÉ DE CONTRÔLE D'UN SYSTÈME D PILE À COMBUSTIBLE

(43) Date of publication of application: 23.10.2024
(73) Proprietor: VOLVO TRUCK CORPORATION, 405 08 Göteborg (SE)
(72) Inventor: ARYA, Pranav, 437 42 Lindome (SE); LINDBERG, Johan, 415 24 Göteborg (SE)
(74) Representative: Valea AB
(86) International application number: PCT/EP2021/085850
(87) International publication number: WO 2023/110070

(56) References cited:
- JP-A- 2007 053 051
- US-B2- 7 402 353

## Description

### TECHNICAL FIELD

The invention relates to a method for controlling a fuel cell system comprising one or more fuel cells. The invention also relates to a fuel cell system comprising one or more fuel cells and a cooling system with a cooling fluid for cooling the one or more fuel cells during use. The invention also relates to a control unit, a vehicle, a computer program and a computer readable medium.

The invention can be applied in heavy-duty vehicles, such as trucks, buses and construction equipment. Although the invention will be described with respect to a truck, the invention is not restricted to this particular vehicle, but may also be used in other vehicles such as passenger cars.

### BACKGROUND

A fuel cell is an electrochemical cell which converts chemical energy into electricity. The fuel cell converts the chemical energy of a fuel, typically hydrogen, and an oxidizing agent, typically oxygen, into electricity. Typically, a plurality of fuel cells is arranged in a fuel cell system for generating power.

Accordingly, a fuel cell system can be used as an alternative or as a complement to electric batteries. In recent years fuel cell systems have been considered for powering electric vehicles, such as pure electric vehicles and hybrid electric vehicles.

When a fuel cell system operates at low current densities, the polarisation cell voltage of the fuel cells increases, which in turn has a negative impact on the durability of the fuel cells. To save the fuel cells from degradation, an operational maximum polarisation cell voltage is set, meaning in practice that the lowest operational power of the fuel cells is limited.

However, in certain applications, such as for some driving scenarios when the fuel cell system is used to power a vehicle, it is desired to use the fuel cell system at an operation power being lower than this limit.

One present solution to this problem is to shut down the fuel cell system, and to instead utilise other power sources such as batteries to provide the requested low power. Another present solution is to allow the fuel cell to continue operating at a higher power than the requested low power, but to utilise the non-required excess power to charge the batteries of the vehicle. However, this solution requires that the batteries are available to store the excess energy.

US7402353 discloses a method for controlling a fuel cell system comprising the fuel cell and a cooling system, wherein during an downward transient of power demand (low power request) excess power is rooted to the coolant pump motor to operate it at its maximum setting.

Therefore, there is a strive to develop alternative and/or improved fuel cell related technology which takes at least some of the above concerns into account.

### SUMMARY

An object of the present invention is to provide a method for controlling a fuel cell system which provides an alternative and/or an improvement in relation to known methods of controlling fuel cell systems. In addition, an object of the invention is to provide a method for controlling a fuel cell system which enables operation at a relatively low operational power of the fuel cell. Yet further objects of the invention are to provide a control unit for controlling cooling of a fuel cell system, a fuel cell system, a vehicle, and a computer program and/or computer readable medium.

According to a first aspect of the invention, at least one of the objects is achieved by a method according to claim 1.

Thus, a method for controlling a fuel cell system is provided, the fuel cell system comprising one or more fuel cells and a cooling system. The method comprises:
- *predicting* a future power request for power delivery from the fuel cell system during a future prediction horizon,
- *detecting* that the predicted future power request fulfils a predetermined coolant temperature reduction condition, wherein the predicted power request must be lower than a predetermined first lower power limit at one or more instant time intervals during the future prediction horizon for the coolant temperature reduction condition to be considered fulfilled,
- *determining* at least one future time interval within the future prediction horizon during which the coolant temperature is to be adjusted to a predeterminable reduced coolant temperature,
- *controlling* the coolant temperature to the reduced coolant temperature during the determined at least one future time interval.

The fuel cell system may typically be configured to be operated below a predetermined polarisation cell voltage limit. The cooling system may be controllable to a coolant temperature setpoint, wherein, for each coolant temperature setpoint, the predetermined polarisation cell voltage limit corresponds to a lower power limit of the fuel cell system.

By the provision of a method as disclosed herein, an improved method is achieved in which the lower power limit may be reduced while maintaining a predetermined maximum polarisation cell voltage limit. The method is based on a realization that, by cooling the fuel cell(s) to a reduced temperature as compared to a nominal coolant temperature obtained if no additional cooling is performed, the lower power limit may be reduced as compared to a first lower power limit obtained if no additional cooling is performed, while remaining below the predetermined maximum polarisation cell voltage limit. Thus, relatively low power operation of the fuel cell(s) may be obtained without increase of the maximum polarisation cell voltage and hence without risking increased degradation of the fuel cell(s).

The step of determining the at least one future time interval during which the coolant temperature is to be adjusted to a predeterminable reduced coolant temperature may be carried out in response to detecting that the predicted future power request fulfils the predetermined coolant temperature reduction condition. Since the method as disclosed herein predicts the future power request and uses this predicted power request for controlling the coolant temperature, a proactive control of the fuel cell temperature and thereby the lower power limit is achieved. Thus, in contrast to a reactive control strategy by which there is a risk that that the cooling system may be operated using short cycles which for instance may result in fluctuations, oscillations or other undesired transient behaviours, the method according to the first aspect of the present invention implies that the fuel cell system may be operated in a more stable manner.

The future power request is herein to be understood as a sequence of instantaneous power requests at given time instants over the future prediction horizon. The prediction horizon may preferably be defined in terms of time, but it is also possible to define it in terms of distance when the fuel cell system is provided in a vehicle travelling along a travelling route. In that case, the future time interval(s) and the instant time interval(s) may be defined in terms of points or intervals along an expected travelling route. The prediction of the future power request is typically performed continually, so that, e.g., the average predicted power request is a moving average value updated at each prediction instant.

By also using the average predicted power request for determining when and for how long to reduce the coolant temperature setpoint, the fuel cell system may be operated with a reduced risk for rapid changes in the control of the cooling system, such as rapid switching between different coolant temperature setpoints, as compared to a control based on an instantaneous power request.

Optionally, an average predicted power request over the future prediction horizon must be higher than a predefined minimum allowable power limit of the fuel cell system for the coolant temperature reduction condition to be considered fulfilled. Thus, the coolant temperature reduction condition is herein only considered fulfilled if on one hand the predicted power request is lower than the predetermined first lower power limit at one or more instant time intervals during the future prediction horizon, and on the other hand the average predicted power request is higher than the predefined minimum allowable power limit.

Optionally, the reduced coolant temperature is lower than a nominal coolant temperature but higher than or equal to a minimum coolant temperature associated with a predefined minimum allowable power limit of the fuel cell system.

The minimum coolant temperature associated with the minimum allowable power limit is to be understood as the lowest possible coolant temperature of the cooling system. The minimum coolant temperature may correspond to a predetermined fixed temperature setpoint, or to a setpoint determined in dependence on, e.g., ambient conditions, such as ambient conditions relating to temperature, humidity, etc..

Optionally, the first lower power limit is associated with a nominal coolant temperature, i.e., a temperature obtained if no additional cooling is performed. In other words, the first lower power limit is the lower power limit of the fuel cell system associated with the nominal coolant temperature setpoint of the cooling system.

Optionally, the at least one future time interval is determined to include at least the one or more instant time intervals. Thus, the coolant temperature is in this case controlled to the reduced coolant temperature at least during the one or more instant time intervals. This enables a reduced output power from the fuel cell system at least during the one or more instant time intervals when the predicted power request is lower than the first lower power limit.

Optionally, when the coolant temperature reduction condition is fulfilled, and when the predicted power request is higher than or equal to a predetermined second lower power limit over the entire prediction horizon, an aggregated duration of the at least one future time interval is set to a first duration coinciding with an aggregated duration of the one or more instant time intervals. The second lower power limit is lower than the first lower power limit. Thus, when the at least one future time interval is determined to include at least the one or more instant time intervals, the coolant temperature is only reduced during the one or more instant time intervals when the predicted power request is lower than the first lower power limit.

Optionally, when the coolant temperature reduction condition is fulfilled, and when the predicted power request is lower than a predetermined second lower power limit during at least one sub-interval of said one or more instant time intervals, an aggregated duration of the at least one future time interval is set to a second duration exceeding an aggregated duration of the one or more instant time intervals. The second lower power limit is lower than the first lower power limit. The second duration may, e.g., exceed the aggregated duration of the one or more instant time intervals at least by a fixed amount. The at least one future time interval herein preferably includes the at least the one or more instant time intervals. If several instant time intervals are identified, a single future time interval spanning over all those instant time intervals may be determined, or two or more future time intervals may be determined, each including at least one of the instant time intervals. Preferably, when the predicted power request is lower than the second lower power limit during a sub-interval of one instant time interval, the future time interval is set so that it includes that instant time interval, and also has a duration exceeding that instant time interval.

Optionally, the second duration is determined in dependence on a relation between an average predicted power request over the future prediction horizon and at least the first lower power limit, optionally also the second power limit. For example, when the average predicted power request is higher than the first lower power limit, the second duration may be set to a shorter value than when the average predicted power request is lower than the first lower power limit.

Optionally, when the average predicted power request over the future prediction horizon is higher than or equal to the first lower power limit, the second duration is set to less than 80% of the future prediction horizon, preferably less than 70%, more preferably less than 60% of the prediction horizon. In such cases, it may be sufficient to reduce the coolant temperature setpoint for a duration significantly shorter than a duration of the prediction horizon in order to comply with the power request as predicted over the prediction horizon.

Optionally, the second lower power limit is associated with the reduced coolant temperature. In other words, the second lower power limit is the lower power limit of the fuel cell system associated with the reduced coolant temperature setpoint of the cooling system.

Optionally, when the coolant temperature reduction condition is fulfilled, and when the average predicted power request over the future prediction horizon is lower than the first lower power limit but higher than or equal to the second lower power limit, the at least one future time interval is set to include at least 90%, preferably 100%, of the future prediction horizon. The inventors have found that it may, when the average power request falls within the defined limits, be beneficial to reduce the coolant temperature setpoint for a relatively long time period, such as over the entire prediction horizon, in order to achieve a stable control of the cooling system and avoid fast switching between coolant temperature setpoints. The relatively long time with a reduced coolant temperature allows the fuel cell system to deliver power at a lower power level than would otherwise be possible.

Optionally, the method comprises:
- in response to *detecting* that an average predicted power request over the future prediction horizon is lower than a predefined minimum allowable power limit, *shutting down* the fuel cell system at least during the prediction horizon.

When the average predicted power request is below the minimum allowable power limit, it may not be possible to operate the fuel cell system. As such, shutting down the fuel cell system may be an appropriate measure to take.

Optionally, in response to *detecting* that the predicted power request is higher than or equal to the determined first lower power limit over the entire future prediction horizon, the method comprises *controlling* the coolant temperature to a nominal coolant temperature. In this case, it will not be necessary to reduce the coolant temperature, and normal operation of the fuel cell using the nominal coolant temperature setpoint is appropriate.

Optionally, the fuel cell system is adapted to deliver power contributing to the propulsion of a vehicle, and *predicting* the future power request comprises:
- *receiving* vehicle related information comprising at least one of traffic information for an expected travelling route of the vehicle during the future prediction horizon, terrain information for the expected travelling route, topographic information for the expected travelling route during the future prediction horizon, weather information for the expected travelling route during the future prediction horizon, vehicle gross weight information,
- using said received vehicle related information for *predicting* the future power request during the future prediction horizon.

One or more of the above vehicle related pieces of information may result in that the future power request is predicted in an appropriate manner.

Optionally, the fuel cell system further comprises a battery to which the one of more fuel cells are electrically connected, and predicting the future power request comprises:
- *receiving* battery information indicative of at least one of a current state-of-charge and an expected energy capacity of the battery during the future prediction horizon,
- using the received battery information for *predicting* the future power request during the future prediction horizon.

The battery information may for instance provide information indicative of whether or not it is possible to operate the fuel cell system to charge the battery. The actual operation of the fuel cell system during the prediction horizon may be dependent on whether or not the battery can be charged. As such, information as regards the battery may be used in order to adequately predict the average predicted power request.

Optionally, the future prediction horizon is a time period of at least 10 seconds, preferably at least 100 seconds, more preferred at least 300 seconds. Optionally, the future prediction horizon may be a time period of 1000 seconds or more.

According to a second aspect of the invention, at least one of the objects is achieved by a control unit according to claim 16.

Thus, a control unit for controlling cooling of a fuel cell system comprising one or more fuel cells and a cooling system for cooling the one or more fuel cells during use is provided. The control unit is adapted to:
- *predict* a future power request for power delivery from the fuel cell system during a future prediction horizon,
- *detect* that the predicted future power request fulfils a predetermined coolant temperature reduction condition, wherein the predicted power request must be lower than a predetermined first lower power limit at one or more instant time intervals during the future prediction horizon for the coolant temperature reduction condition to be considered fulfilled,
- *determine* at least one future time interval within the future prediction horizon during which the coolant temperature is to be adjusted to a predeterminable reduced coolant temperature,
- *control* the coolant temperature to the reduced coolant temperature during the determined at least one future time interval.

The control unit may be configured to perform the method according to any one of the embodiments of the first aspect of the invention. The control unit may be an electronic control unit. Th control unit may, e.g., be configured to control the coolant temperature by controlling a coolant temperature setpoint.

Advantages and effects of the second aspect of the invention are largely analogous to the advantages and effects of the fist aspect of the invention.

According to a third aspect of the invention, at least one of the objects is achieved by a fuel cell system according to claim 17.

Thus, a fuel cell system comprising one or more fuel cells and a cooling system for cooling the one or more fuel cells during use is provided. The fuel cell system further comprises a control unit according to any one of the embodiments of the second aspect of the invention.

According to a fourth aspect of the invention, at least one of the objects is achieved by a vehicle according to claim 18.

Thus, a vehicle comprising the fuel cell system according to any one of the embodiments of the third aspect of the invention and/or being in communication with a control unit according to any one of the embodiments of the second aspect of the invention is provided.

Advantages and effects of the fourth aspect are largely analogous to the advantages and effects of the first, second and third aspects of the invention. Furthermore, all embodiments of the fourth aspect of the invention are combinable with all embodiments of the first, second and third aspects of the invention, and vice versa.

According to a fifth aspect of the invention, at least one of the objects is achieved by a computer program according to claim 19.

Thus, a computer program comprising program code means for performing the method of any one of the embodiments of the first aspect of the invention when the program is run on a computer, such as, e.g., a control unit of a vehicle or a fuel cell system, such as the control unit according to any one of the embodiments of the second aspect of the invention, is provided.

According to a sixth aspect of the invention, at least one of the objects is achieved by a computer readable medium according to claim 20.

Thus, a computer readable medium carrying a computer program comprising program code means for performing the method of any one of the embodiments of the first aspect of the invention when the program product is run on a computer, such as, e.g., a control unit of a vehicle or a fuel cell system, such as the control unit of any one of the embodiments of the second aspect of the invention, is provided.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic side view of a vehicle;
- Fig. 2: is a schematic view of fuel cell system according to an example embodiment of the invention;
- Fig. 3: is a flow chart illustrating an embodiment of the method of the present invention,
- Fig. 4a - 4d: illustrate fuel cell power as a function of time over a prediction horizon, and
- Fig. 5: is another flow chart illustrating a method according to an embodiment of the invention.

### DETAILED DESCRIPTION OF EXAMPLE EMBODIMENTS OF THE INVENTION

With reference to the appended drawings, below follows a more detailed description of embodiments of the invention cited as examples.

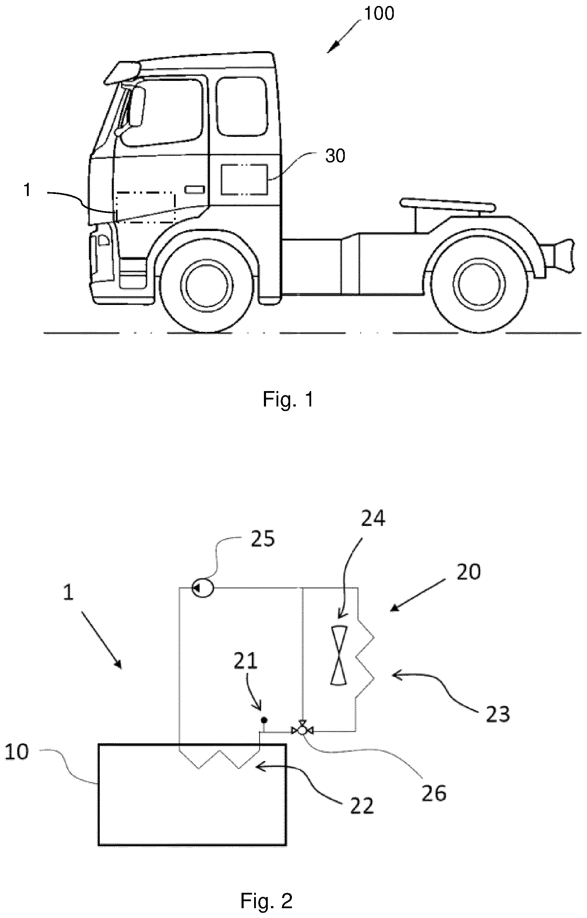

Fig. 1 depicts a side view of a vehicle 100 according to an example embodiment of the invention. The vehicle 100 is here a truck, more specifically a heavy-duty truck for towing one or more trailers (not shown). Even though a heavy-duty truck 100 is shown it shall be noted that the invention is not limited to this type of vehicle but may be used for any other type of vehicle, such as a bus, construction equipment, e.g. a wheel loader and an excavator, and a passenger car. The invention is also applicable for other applications not relating to vehicles as long as a fuel cell is utilized. However, the invention has shown to be particularly advantageous for vehicles since vehicles may occasionally require low power mode operation.

The vehicle 100 comprises a fuel cell system 1 according to an example embodiment of the invention. The fuel cell system 1 is here used for powering one or more electric motors (not shown) which are used for creating a propulsion force to the vehicle 100. The fuel cell system 1 may additionally or alternatively be used for powering other electric power consumers of the vehicle, such as an electric motor for a refrigerator system, an electric motor for an air conditioning system or any other electric power consuming function of the vehicle 100.

The vehicle 100 further comprises a control unit 30 according to an example embodiment of the invention. The control unit 30 is thus used for controlling the fuel cell system 1. Even though an on-board control unit 30 is shown, it shall be understood that the control unit 30 could also be a remote control unit 30, i.e. an off-board control unit, or a combination of an on-board and off-board control unit. The control unit 30 may be configured to control the fuel cell system 1 by issuing control signals and by receiving status information relating to the fuel cell system 1.

The control unit 30 is an electronic control unit and may comprise processing circuitry which is adapted to run a computer program as disclosed herein. The control unit 30 may comprise hardware and/or software for performing the method according to the invention. In an embodiment the control unit 30 may be denoted a computer. The control unit 30 may be constituted by one or more separate sub-control units. In addition, the control unit 30 may communicate by use of wired and/or wireless communication means.

Fig. 2 depicts a schematic illustration of a fuel cell system 1 according to an example embodiment of the invention. The fuel cell system 1 may for example be used in the vehicle 100 as shown in fig. 1.

The fuel cell system 1 comprises one or more fuel cells 10, typically several fuel cells. The fuel cells 10 may also be denoted as a fuel cell stack, wherein the fuel cell stack may comprise several hundreds of fuel cells. Further, the fuel cell system 1 will be arranged to provide the fuel cell 10 with necessary supply of hydrogen and air. Further the fuel cell system 1 comprises a cooling system 20. As illustrated in fig. 2, the cooling system 20 may be a cooling system with a cooling fluid for cooling the one or more fuel cells 10 during use. In addition, the fuel cell system 1 may further comprise a control unit (not shown in fig. 2) which is configured to perform a method according to an embodiment of the invention. The control unit may be the control unit 30 shown in fig. 1.

As shown, the cooling system 20 as exemplified in fig. 2 may comprise a heat exchanger 22 which is provided at the one or more fuel cells 10 and adapted to transfer heat from the one or more fuel cells 10 to the cooling fluid. The cooling system 20 as shown further comprises an additional heat exchanger 23, or radiator, and a fan 24 for blowing air over the heat exchanger 23, thereby cooling the cooling fluid. The cooling system 20 further comprises a pump 25 for pumping the cooling fluid, in the shown embodiment in a counterclockwise direction. In addition, as shown, the cooling system 20 may comprise at least one valve 26, such as a bypass valve, arranged to bypass the cooling fluid with respect to the additional heat exchanger 23. The pump 25, the valve 26 and the fan 24 are controlled by the aforementioned control unit 30 for controlling the cooling system 20. The cooling system 20 is thereby controllable to a coolant temperature. The control unit 30 may control the cooling system 20 by using a coolant temperature setpoint.

Optionally, and as shown in fig. 2, the fuel cell system 1 may further comprise a temperature sensor 21 for measuring a temperature indicative of the temperature of the one or more fuel cells 10. In the shown embodiment, the temperature sensor 21 is located downstream the heat exchanger 22 and upstream the valve 26. It shall however be understood that a temperature sensor could additionally or alternatively be located somewhere else in the fuel cell system 1 as long it can measure a temperature which is indicative of the temperature of the one or more fuel cells 10.

The fuel cell system 1 may further comprise a battery (not shown) to which the one of more fuel cells 10 are electrically connected. The fuel cell system 1 may be adapted to charge the battery at least during a charging condition of the power assembly.

Further, in addition or alternative to what is mentioned in the above, the fuel cell system 1 may comprise various components such as compressors, sensors, pumps, valves and electrical components.

It is desirable to operate the fuel cell system 1 below a predetermined polarisation cell voltage limit in order to reduce fuel cell degradation. The polarisation cell voltage may be described as a temperature dependent function of the fuel cell system power. Thus, for each coolant temperature setpoint, the predetermined maximum polarisation cell voltage limit corresponds to a lower power limit of the fuel cell system 1. For a given coolant temperature setpoint, the polarisation cell voltage is generally highest as a lower limit fuel cell system power is provided by the fuel cell(s). The polarisation cell voltage decreases with increasing fuel cell system power. The polarisation cell voltage as a function of the fuel cell system power may vary between different fuel cells and may for example be obtained by empirical tests. To spare the fuel cell(s) 10 from degradation, it is desired to operate the fuel cell(s) 10 below the predetermined polarisation cell voltage limit.

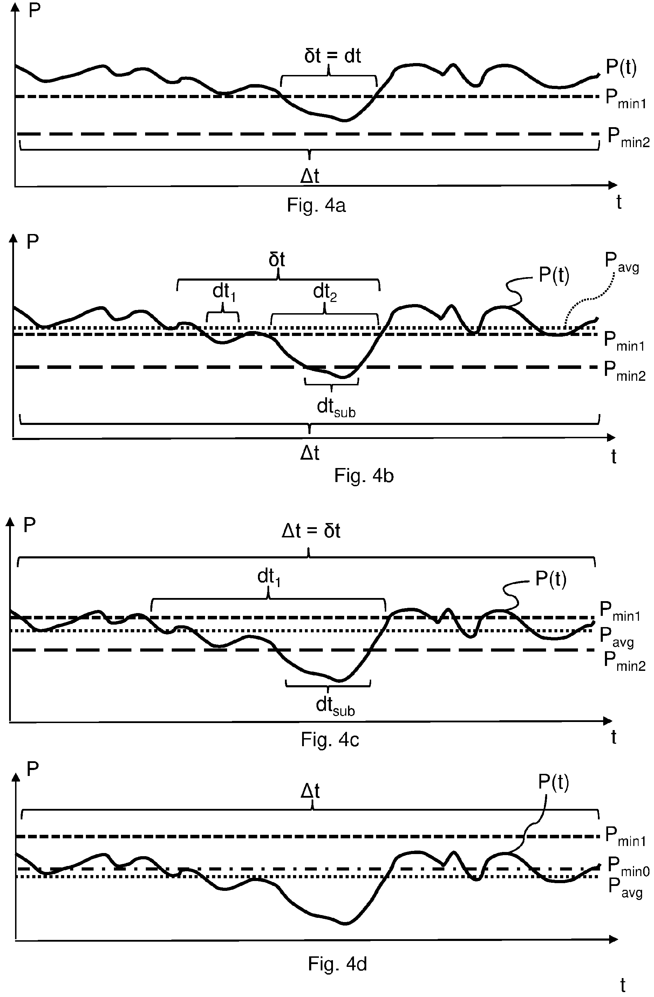

Reference is also made to figs. 4a-d, showing fuel cell power P as a function of time t, wherein the solid line represents a predicted future power request P(t) over a future prediction horizon Δt.

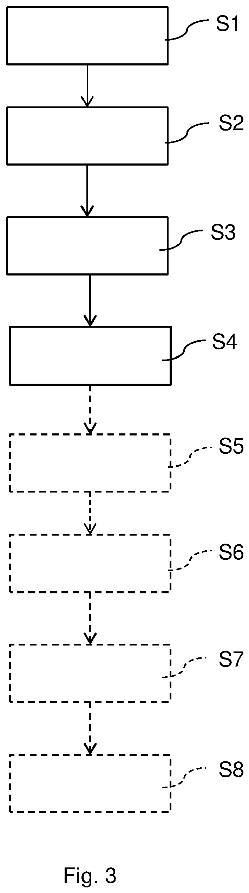

In a first step **S1** of the method illustrated in fig. 3, the future power request P(t) for power delivery from the fuel cell system 1 during the future prediction horizon Δt is predicted. The future prediction horizon Δt may, e.g., be a time period of at least 10 seconds, preferably at least 100 seconds, more preferred at least 300 seconds.

When the fuel cell system 1 is provided in a vehicle, such as the vehicle 100 in fig. 1, the step S1 may e.g. comprise receiving vehicle related information comprising at least one of traffic information for an expected travelling route of the vehicle 100 during the future prediction horizon Δt, terrain information for the expected travelling route, topographic information for the expected travelling route during the future prediction horizon Δt, weather information for the expected travelling route during the future prediction horizon Δt, vehicle gross weight information, etc. The step S1 further comprises using said received vehicle related information for predicting the future power request P(t) during the future prediction horizon Δt.

When the fuel cell system 1 comprises a battery to which the one of more fuel cells 10 are electrically connected, the step S1 of predicting the future power request P(t) may further comprise receiving battery information indicative of at least one of a current state-of-charge and an energy capacity of the battery during the future prediction horizon Δt, and using the received battery information for predicting the future power request P(t) during the future prediction horizon Δt.

In a second step **S2,** it is detected that a predetermined coolant temperature reduction condition is fulfilled. The coolant temperature reduction condition may be considered fulfilled when on one hand the predicted power request P(t) is lower than a first lower power limit Pₘᵢₙ₁, associated with a nominal coolant temperature, at one or more instant time intervals dt, dt₁, dt₂ during the prediction horizon Δt, and when on the other hand an average predicted power request P_{avg} over the prediction horizon Δt is higher than a minimum allowable power limit Pₘᵢₙ₀ of the fuel cell system 1. The first lower power limit Pₘᵢₙ₁ is shown as a dashed line in figs. 4a-d, the minimum allowable power limit Pₘᵢₙ₀ is shown as a dash-dotted line in fig. 4d, and the average predicted power request P_{avg} is shown as a dotted line in figs. 4b-d.

A third step **S3** is carried out in response to the predetermined coolant temperature reduction condition being fulfilled. In this step S3, at least one future time interval δt within the prediction horizon Δt, during which future time interval δt the coolant temperature is to be adjusted to a predeterminable reduced coolant temperature, is determined. The reduced coolant temperature may be lower than the nominal coolant temperature but higher than or equal to a minimum coolant temperature associated with the minimum allowable power limit Pₘᵢₙ₀ of the fuel cell system 1.

A fourth step **S4** of controlling the coolant temperature to the reduced coolant temperature is carried out during the determined at least one future time interval δt. In other words, the reduced coolant temperature is used as a target value, or temperature setpoint, for the coolant temperature control.

When it is detected in step S2 that the coolant temperature reduction condition is fulfilled, and when the predicted power request P(t) is higher than or equal to a second lower power limit Pₘᵢₙ₂ associated with the reduced coolant temperature over the entire prediction horizon Δt, an aggregated duration of the at least one future time interval δt may be set to a first duration coinciding with an aggregated duration of the one or more instant time intervals dt. This situation is illustrated in fig. 4a, where the predicted power request P(t) is only lower than the first lower power limit Pₘᵢₙ₁, associated with the nominal coolant temperature, during a single time instant time interval dt, but is never lower than the second lower power limit Pₘᵢₙ₂. The coolant temperature is in step S4 controlled to the reduced coolant temperature during the time interval δt coinciding with the instant time interval dt.

It is to be noted that the second lower power limit Pₘᵢₙ₂ may coincide with the minimum allowable power limit Pₘᵢₙ₀ of the fuel cell system 1, but it may also be a power limit between the first lower power limit Pₘᵢₙ₁ and the minimum allowable power limit Pₘᵢₙ₀. For example, it may be checked whether the predicted power request P(t) is higher than or equal to a second lower power limit Pₘᵢₙ₂ associated with a coolant temperature reduced by a first amount, and if not, whether the predicted power request P(t) is higher than or equal to a third lower power limit associated with a coolant temperature reduced by a second amount, etc., until the minimum coolant temperature is reached.

Fig. 4b illustrates a situation in which the predicted power request P(t) is lower than the first lower power limit Pₘᵢₙ₁ during at least two instant time intervals dt₁, dt₂. Furthermore, the predicted power request P(t) is lower than the second lower power limit Pₘᵢₙ₂ associated with the reduced coolant temperature during a sub-interval dt_{sub} of the instant time interval dt₂. In this case, an aggregated duration of the at least one future time interval δt is set to a second duration exceeding an aggregated duration of the one or more instant time intervals dt₁, dt₂. The second duration may e.g. exceed the aggregated duration of the one or more instant time intervals dt₁, dt₂ by a fixed amount. The second duration may also be determined in dependence on a relation between the average predicted power request P_{avg} over the prediction horizon Δt and at least the first lower power limit Pₘᵢₙ₁, optionally also the second power limit Pₘᵢₙ₂. For example, as illustrated in fig. 4b, when the average predicted power request P(t) over the prediction horizon Δt is higher than or equal to the first lower power limit Pₘᵢₙ₁, the second duration of the future time interval δt is set to less than 80% of the prediction horizon Δt, preferably less than 70%, more preferably less than 60% of the prediction horizon Δt. Preferably, as illustrated in fig. 4b, the coolant temperature may be reduced prior to the predicted time instant at which the predicted power request P(t) becomes lower than the first lower power limit Pₘᵢₙ₁.

If instead the average predicted power request P_{avg} over the prediction horizon Δt is lower than the first lower power limit Pₘᵢₙ₁, but higher than or equal to the second lower power limit Pₘᵢₙ₂, the future time interval δt may be set to include at least 90%, preferably 100%, of the prediction horizon Δt. This is illustrated in fig. 4c, wherein the future power request P(t) is during several instant time intervals lower than the first lower power limit Pₘᵢₙ₁, and lower than the second lower power limit Pₘᵢₙ₂ during a sub-interval dt_{sub} of the instant time interval dt₁. In this case, the average predicted power request P_{avg} is between the first lower power limit Pₘᵢₙ₁ and the second lower power limit Pₘᵢₙ₂ and the future time interval δt is set to extend over the entire prediction horizon Δt.

Fig. 4d illustrates a situation in which it is detected that the average predicted power request P_{avg} over the prediction horizon Δt is lower than the predefined minimum allowable power limit Pₘᵢₙ₀. In this situation, the method includes shutting down the fuel cell system 1 at least during the prediction horizon Δt.

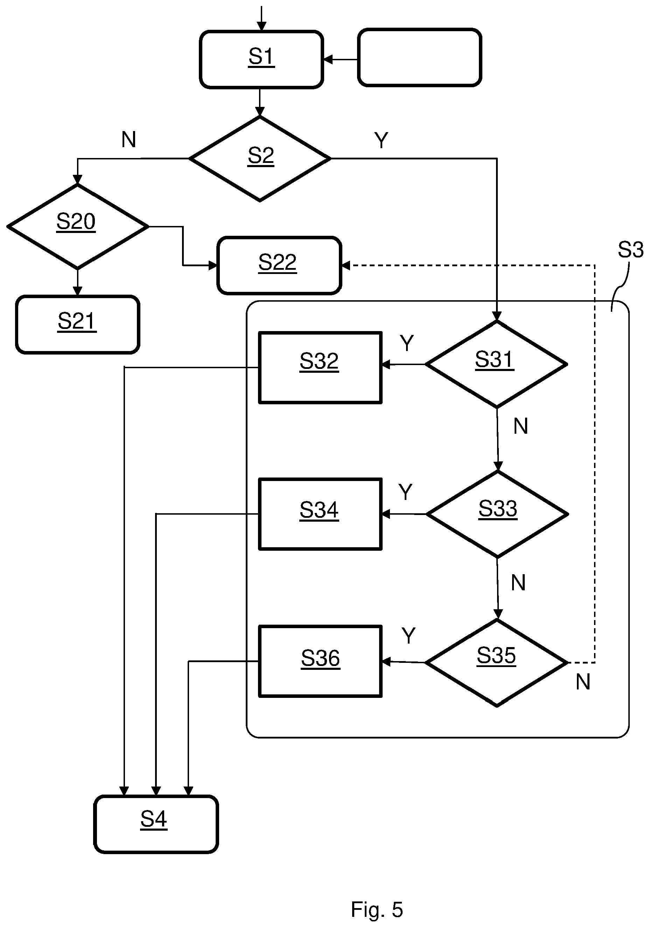

Fig. 5 is another flow chart illustrating a method according to an embodiment of the invention. Initially, the method includes the step S1 of predicting the future power request P(t). As indicated in fig. 5, this may comprise receiving information from other information sources. Purely by way of examples, such information sources may comprise one or more sensors.

The method then proceeds to the step S2 of detecting that the predetermined coolant temperature reduction condition is fulfilled. When it is determined that the predetermined coolant temperature reduction condition as described above is fulfilled, the method proceeds to step S3 of determining the least one future time interval δt. This step may in turn comprise several sub-steps.

First, it may in step S31 be checked if the predicted power request P(t) is higher than or equal to the second lower power limit Pₘᵢₙ₂ over the entire prediction horizon Δt. If the answer is YES, the method proceeds to step S32 of setting the aggregated duration of the at least one future time interval δt to coincide with the aggregated duration of the one or more instant time intervals dt. The method then proceeds to step S4 of controlling the coolant temperature to the reduced coolant temperature during the determined future time interval δt.

If the answer in step S31 is NO, i.e., the predicted power request P(t) is lower than the second lower power limit Pₘᵢₙ₂ at least at some point during the prediction horizon Δt, the method proceeds to step S33.

In step S33, it is checked if the average power request P_{avg} is higher than or equal to the first lower power limit Pₘᵢₙ₁. If the answer is YES, the method proceeds to step S34 of setting the aggregated duration of the at least one future time interval δt to a second duration as required, exceeding the aggregated duration of the one or more instant time intervals dt, but being significantly smaller than the prediction horizon Δt. The method then proceeds to step S4 of controlling the coolant temperature to the reduced coolant temperature during the determined future time interval δt.

If the answer in step S33 is NO, the method proceeds to step S35.

In step S35, it is checked if the average power request P_{avg} is higher than or equal to the second lower power limit Pₘᵢₙ₂. If the answer is YES, the method proceeds to step S36 of setting the aggregated duration of the at least one future time interval δt to a second duration including at least 90%, preferably 100%, of the prediction horizon Δt. The method then proceeds to step S4 of controlling the coolant temperature to the reduced coolant temperature during the determined future time interval δt.

If the answer in step S35 is NO, i.e., the average power request P_{avg} is lower than the second lower power limit Pₘᵢₙ₂, the method may repeat step S36 for a third lower power limit, lower than the second lower power limit Pₘᵢₙ₂ but higher than the minimum allowable power limit Pₘᵢₙ₀. If the average power request P_{avg} is ultimately found to be lower than the minimum allowable power limit Pₘᵢₙ₀, the method proceeds to a step S22 of shutting down the fuel cell system 1 at least during the prediction horizon Δt.

When it is in step S2 determined that the predetermined coolant temperature reduction condition is not fulfilled, the method may proceed to a step S20 of determining a reason for this. If the reason is that the predicted power request P(t) is consistently higher than the first lower power limit Pₘᵢₙ₁ over the prediction horizon Δt, the method proceeds to step S21 of controlling the coolant temperature to the nominal coolant temperature. This corresponds to normal operation of the fuel cell system 1. If the reason is instead that the average power request P_{avg} over the prediction horizon Δt is lower than the predefined minimum allowable power limit Pₘᵢₙ₀, the method proceeds to the step S22 of shutting down the fuel cell system 1 at least during the prediction horizon Δt.

Further advantages and advantageous features of the invention are disclosed in the following description and in the dependent claims. It is to be understood that the present invention is not limited to the embodiments described above and illustrated in the drawings; rather, the skilled person will recognize that many changes and modifications may be made within the scope of the appended claims.

## Claims

1. A method for controlling a fuel cell system (1), the fuel cell system (1) comprising one or more fuel cells (10) and a cooling system (20), the method comprising:
- *predicting* (S1) a future power request (P(t)) for power delivery from the fuel cell system (1) during a future prediction horizon (Δt),
- *detecting* (S2) that the predicted future power (P(t)) request fulfils a predetermined coolant temperature reduction condition, wherein the predicted power request (P(t)) must be lower than a predetermined first lower power limit (Pₘᵢₙ₁) at one or more instant time intervals (dt) during the future prediction horizon (Δt) for the coolant temperature reduction condition to be considered fulfilled,
- *determining* (S3) at least one future time interval (δt) within the future prediction horizon (Δt) during which the coolant temperature is to be adjusted to a predeterminable reduced coolant temperature,
- *controlling* (S4) the coolant temperature to the reduced coolant temperature during the determined at least one future time interval (δt).

2. The method according to claim 1, wherein an average predicted power request (P_{avg}) over the future prediction horizon (Δt) must be higher than a predefined minimum allowable power limit (Pₘᵢₙ₀) of the fuel cell system (1) for the coolant temperature reduction condition to be considered fulfilled.

3. The method according to claim 1 or 2, wherein the reduced coolant temperature is lower than a nominal coolant temperature but higher than or equal to a minimum coolant temperature associated with a predefined minimum allowable power limit (Pₘᵢₙ₀) of the fuel cell system (1).

4. The method according to any one of the preceding claims, wherein the first lower power limit (Pₘᵢₙ₁) is associated with a nominal coolant temperature.

5. The method according to any one of the preceding claims, wherein the at least one future time interval (δt) is determined to include at least the one or more instant time intervals (dt).

6. The method according to any one of the preceding claims, wherein, when the coolant temperature reduction condition is fulfilled, and when the predicted power request (P(t)) is higher than or equal to a predetermined second lower power limit (Pₘᵢₙ₂) over the entire prediction horizon (Δt), an aggregated duration of the at least one future time interval (δt) is set to a first duration coinciding with an aggregated duration of the one or more instant time intervals (dt).

7. The method according to any one of the preceding claims, wherein, when the coolant temperature reduction condition is fulfilled, and when the predicted power request (P(t)) is lower than a predetermined second lower power limit (Pₘᵢₙ₂) during at least one sub-interval (dt_{sub}) of said one or more instant time intervals (dt), an aggregated duration of the at least one future time interval (δt) is set to a second duration exceeding an aggregated duration of the one or more instant time intervals (dt).

8. The method according to claim 7, wherein the second duration is determined in dependence on a relation between an average predicted power request (P_{avg}) over the future prediction horizon (Δt) and at least the first lower power limit (Pₘᵢₙ₁).

9. The method according to claim 7 or 8, wherein, when the average predicted power request (P_{avg}) over the future prediction horizon (Δt) is higher than or equal to the first lower power limit (Pₘᵢₙ₁), the second duration is set to less than 80% of the future prediction horizon (Δt), preferably less than 70%, more preferably less than 60% of the future prediction horizon (Δt).

10. The method according to any one of claims 6-9, wherein the second lower power limit (Pₘᵢₙ₂) is associated with the reduced coolant temperature.

11. The method according to any one of claims 6-10 when dependent on at least claim 2, wherein, when the coolant temperature reduction condition is fulfilled, and when an average predicted power request (P_{avg}) over the future prediction horizon (Δt) is lower than the first lower power limit (Pₘᵢₙ₁) but higher than or equal to the second lower power limit (Pₘᵢₙ₂), the at least one future time interval (δt) is set to include at least 90%, preferably 100%, of the future prediction horizon (Δt).

12. The method according to any one of the preceding claims, comprising:
- in response to *detecting* that an average predicted power request (P_{avg}) over the future prediction horizon (Δt) is lower than a predefined minimum allowable power limit (Pₘᵢₙ₀), *shutting down* the fuel cell system (1) at least during the prediction horizon (Δt).

13. The method according to any one of the preceding claims, wherein, in response to *detecting* that the predicted power request (P(t)) is higher than or equal to the determined first lower power limit (Pₘᵢₙ₁) over the entire future prediction horizon (Δt), the method comprises *controlling* the coolant temperature to a nominal coolant temperature.

14. The method according to any one of the preceding claims, wherein the fuel cell system (1) is adapted to deliver power contributing to the propulsion of a vehicle (100), and wherein *predicting* the future power request (P(t)) comprises:
- *receiving* vehicle related information comprising at least one of traffic information for an expected travelling route of the vehicle (100) during the future prediction horizon (Δt), terrain information for the expected travelling route, topographic information for the expected travelling route during the future prediction horizon (Δt), weather information for the expected travelling route during the future prediction horizon (Δt), vehicle gross weight information,
- using said received vehicle related information for *predicting* the future power request (P(t)) during the future prediction horizon (Δt).

15. The method according to any one of the preceding claims, wherein the fuel cell system (1) further comprises a battery to which the one of more fuel cells (10) are electrically connected, and wherein predicting the future power request (P(t)) comprises:
- *receiving* battery information indicative of at least one of a current state-of-charge and an expected energy capacity of the battery during the future prediction horizon (Δt),
- using the received battery information for *predicting* the future power request (P(t)) during the future prediction horizon (Δt).

16. A control unit (30) for controlling cooling of a fuel cell system (1) comprising one or more fuel cells (10) and a cooling system (20) for cooling the one or more fuel cells (10) during use, the control unit (30) being adapted to:
- *predict* a future power request (P(t)) for power delivery from the fuel cell system (1) during a future prediction horizon (Δt),
- *detect* that the predicted future power request (P(t)) fulfils a predetermined coolant temperature reduction condition, wherein the predicted power request (P(t)) must be lower than a predetermined first lower power limit at one or more instant time intervals (dt) during the future prediction horizon (Δt) for the coolant temperature reduction condition to be considered fulfilled,
- *determine* at least one future time interval (δt) within the future prediction horizon (Δt) during which the coolant temperature is to be adjusted to a predeterminable reduced coolant temperature,
- *control* the coolant temperature to the reduced coolant temperature during the determined at least one future time interval (δt).

17. A fuel cell system (1) comprising one or more fuel cells (10) and a cooling system (20) for cooling the one or more fuel cells (10), wherein the fuel system (1) further comprises a control unit (30) according to claim 16.

18. A vehicle (100) comprising the fuel cell system (1) according to claim 17 and/or being in communication with a control unit (30) according to claim 16.

19. A computer program comprising program code means for performing the method of any of claims 1-15 when said program is run on a computer.

20. A computer readable medium carrying a computer program comprising program code means for performing the method of any of claims 1-15 when said program product is run on a computer.

## Patentansprüche

1. Verfahren zum Steuern eines Brennstoffzellensystems (1), das Brennstoffzellensystem (1) umfassend eine oder mehrere Brennstoffzellen (10) und ein Kühlsystem (20), das Verfahren umfassend:
- *Vorhersagen* (S1) einer zukünftigen Leistungsanforderung (P(t)) für eine Leistungsabgabe aus dem Brennstoffzellensystem (1) während eines zukünftigen Vorhersagehorizonts (Δt),
- *Erfassen* (S2), dass die vorhergesagte zukünftige Leistungs(P(t))-Anforderung eine vorbestimmte Kühlmitteltemperaturreduktionsbedingung erfüllt, wobei die vorhergesagte Leistungsanforderung (P(t)) niedriger als eine vorbestimmte erste untere Leistungsgrenze (Pₘᵢₙ₁) zu einem oder mehreren momentanen Zeitintervallen (dt) während des zukünftigen Vorhersagehorizonts (Δt) sein muss, damit die Kühlmitteltemperaturreduktionsbedingung als erfüllt betrachtet wird,
- *Bestimmen* (S3) mindestens eines zukünftigen Zeitintervalls (δt) innerhalb des zukünftigen Vorhersagehorizonts (Δt), während dessen die Kühlmitteltemperatur auf eine vorbestimmbare reduzierte Kühlmitteltemperatur eingestellt werden soll,
- *Steuern* (S4) der Kühlmitteltemperatur auf die reduzierte Kühlmitteltemperatur während des bestimmten mindestens einen zukünftigen Zeitintervalls (δt).

2. Verfahren nach Anspruch 1, wobei eine durchschnittliche vorhergesagte Leistungsanforderung (P_{durchschn}) über den zukünftigen Vorhersagehorizont (Δt) höher als eine vordefinierte minimal zulässige Leistungsgrenze (Pₘᵢₙ₀) des Brennstoffzellensystems (1) sein muss, damit die Kühlmitteltemperaturreduktionsbedingung als erfüllt betrachtet wird.

3. Verfahren nach Anspruch 1 oder 2, wobei die reduzierte Kühlmitteltemperatur niedriger als eine nominale Kühlmitteltemperatur, jedoch höher als oder gleich einer minimalen Kühlmitteltemperatur ist, die mit einer vordefinierten minimalen zulässigen Leistungsgrenze (Pₘᵢₙ₀) des Brennstoffzellensystems (1) verknüpft ist.

4. Verfahren nach einem der vorstehenden Ansprüche, wobei die erste untere Leistungsgrenze (Pₘᵢₙ₁) mit einer nominalen Kühlmitteltemperatur verknüpft ist.

5. Verfahren nach einem der vorstehenden Ansprüche, wobei das mindestens eine zukünftige Zeitintervall (δt) bestimmt wird, um mindestens das eine oder die mehreren momentanen Zeitintervalle (dt) einzuschließen.

6. Verfahren nach einem der vorstehenden Ansprüche, wobei, wenn die Kühlmitteltemperaturreduktionsbedingung erfüllt ist und wenn die vorhergesagte Leistungsanforderung (P(t)) über den gesamten Vorhersagehorizont (Δt) höher als oder gleich einer vorbestimmten zweiten unteren Leistungsgrenze (Pₘᵢₙ₂) ist, eine aggregierte Dauer des mindestens einen zukünftigen Zeitintervalls (δt) auf eine erste Dauer eingestellt wird, die mit einer aggregierten Dauer des einen oder der mehreren momentanen Zeitintervalle (dt) übereinstimmt.

7. Verfahren nach einem der vorstehenden Ansprüche, wobei, wenn die Kühlmitteltemperaturreduktionsbedingung erfüllt ist und wenn die vorhergesagte Leistungsanforderung (P(t)) niedriger als eine vorbestimmte zweite untere Leistungsgrenze (Pₘᵢₙ₂) während mindestens einem Unterintervall (dtᵤₙₜₑᵣ) der einen oder der mehreren momentanen Zeitintervalle (dt) ist, eine aggregierte Dauer des mindestens einen zukünftigen Zeitintervalls (δt) auf eine zweite Dauer eingestellt wird, die eine aggregierte Dauer der einen oder der mehreren momentanen Zeitintervalle (dt) übersteigt.

8. Verfahren nach Anspruch 7, wobei die zweite Dauer in Abhängigkeit von einer Beziehung zwischen einer durchschnittlichen vorhergesagten Leistungsanforderung (P_{durchschn}) über den zukünftigen Vorhersagehorizont (Δt) und mindestens der ersten unteren Leistungsgrenze (Pₘᵢₙ₁) bestimmt wird.

9. Verfahren nach Anspruch 7 oder 8, wobei, wenn die durchschnittliche vorhergesagte Leistungsanforderung (P_{durchschn}) über den zukünftigen Vorhersagehorizont (Δt) höher als oder gleich der ersten unteren Leistungsgrenze (Pₘᵢₙ₁) ist, die zweite Dauer auf weniger als 80 % des zukünftigen Vorhersagehorizonts (Δt), vorzugsweise weniger als 70 %, mehr bevorzugt weniger als 60 % des zukünftigen Vorhersagehorizonts (Δt) eingestellt wird.

10. Verfahren nach einem der Ansprüche 6 bis 9, wobei die zweite untere Leistungsgrenze (Pₘᵢₙ₂) mit der reduzierten Kühlmitteltemperatur verknüpft ist.

11. Verfahren nach einem der Ansprüche 6 bis 10, wenn abhängig von mindestens Anspruch 2, wobei, wenn die Kühlmitteltemperaturreduktionsbedingung erfüllt ist und wenn eine durchschnittliche vorhergesagte Leistungsanforderung (P_{durchschn}) über den zukünftigen Vorhersagehorizont (Δt) niedriger als die erste untere Leistungsgrenze (Pₘᵢₙ₁), jedoch höher als oder gleich der zweiten unteren Leistungsgrenze (Pₘᵢₙ₂) ist, das mindestens eine zukünftige Zeitintervall (δt) eingestellt wird, um mindestens 90 %, vorzugsweise 100 %, des zukünftigen Vorhersagehorizonts (Δt) einzuschließen.

12. Verfahren nach einem der vorstehenden Ansprüche, umfassend:
- als Reaktion auf das *Erfassen*, dass eine durchschnittliche vorhergesagte Leistungsanforderung (P_{durchschn}) über den zukünftigen Vorhersagehorizont (Δt) niedriger als eine vordefinierte minimale zulässige Leistungsgrenze (Pₘᵢₙ₀) ist, *Abschalten* des Brennstoffzellensystems (1) mindestens während des Vorhersagehorizonts (Δt).

13. Verfahren nach einem der vorstehenden Ansprüche, wobei als Reaktion auf das *Erfassen*, dass die vorhergesagte Leistungsanforderung (P(t)) über den gesamten zukünftigen Vorhersagehorizont (Δt) höher als oder gleich der bestimmten ersten unteren Leistungsgrenze (Pₘᵢₙ₁) ist, das Verfahren das *Steuern* der Kühlmitteltemperatur auf eine nominale Kühlmitteltemperatur umfasst.

14. Verfahren nach einem der vorstehenden Ansprüche, wobei das Brennstoffzellensystem (1) angepasst ist, Leistung abzugeben, die zu dem Antrieb eines Fahrzeugs (100) beiträgt, und wobei *das Vorhersagen* der zukünftigen Leistungsanforderung (P(t)) umfasst:
- *Empfangen* von fahrzeugbezogenen Informationen, umfassend mindestens eines von Verkehrsinformationen für eine erwartete Fahrtroute des Fahrzeugs (100) während des zukünftigen Vorhersagehorizonts (Δt), Geländeinformationen für die erwartete Fahrtroute, topographische Informationen für die erwartete Fahrtroute während des zukünftigen Vorhersagehorizonts (Δt), Wetterinformationen für die erwartete Fahrtroute während des zukünftigen Vorhersagehorizonts (Δt), Fahrzeuggesamtgewichtsinformationen,
- Verwenden der empfangenen fahrzeugbezogenen Informationen zum *Vorhersagen* der zukünftigen Leistungsanforderung (P(t)) während des zukünftigen Vorhersagehorizonts (Δt).

15. Verfahren nach einem der vorstehenden Ansprüche, wobei das Brennstoffzellensystem (1) ferner eine Batterie umfasst, mit der die eine oder die mehreren Brennstoffzellen (10) elektrisch verbunden sind, und wobei das Vorhersagen der zukünftigen Leistungsanforderung (P(t)) umfasst:
- *Empfangen* von Batterieinformationen, die mindestens eines von einem aktuellen Ladezustand und einer erwarteten Energiekapazität der Batterie während des zukünftigen Vorhersagehorizonts (Δt) anzeigen,
- Verwenden der empfangenen Batterieinformationen zum *Vorhersagen* der zukünftigen Leistungsanforderung (P(t)) während des zukünftigen Vorhersagehorizonts (Δt).

16. Steuereinheit (30) zum Steuern eines Kühlens eines Brennstoffzellensystems (1), umfassend eine oder mehrere Brennstoffzellen (10) und ein Kühlsystem (20) zum Kühlen der einen oder der mehreren Brennstoffzellen (10) während einer Verwendung, wobei die Steuereinheit (30) angepasst ist zum:
- *Vorhersagen* einer zukünftigen Leistungsanforderung (P(t)) für die Leistungsabgabe aus dem Brennstoffzellensystem (1) während eines zukünftigen Vorhersagehorizonts (Δt),
- *Erfassen*, dass die vorhergesagte zukünftige Leistungsanforderung (P(t)) eine vorbestimmte Kühlmitteltemperatureduktionsbedingung erfüllt, wobei die vorhergesagte Leistungsanforderung (P(t)) niedriger als eine vorbestimmte erste untere Leistungsgrenze zu einem oder mehreren momentanen Zeitintervallen (dt) während des zukünftigen Vorhersagehorizonts (Δt) sein muss, damit die Kühlmitteltemperaturreduktionsbedingung als erfüllt betrachtet wird,
- *Bestimmen* mindestens eines zukünftigen Zeitintervalls (δt) innerhalb des zukünftigen Vorhersagehorizonts (Δt), während dessen die Kühlmitteltemperatur auf eine vorbestimmbare reduzierte Kühlmitteltemperatur eingestellt werden soll,
- *Steuern* der Kühlmitteltemperatur auf die reduzierte Kühlmitteltemperatur während des bestimmten mindestens einen zukünftigen Zeitintervalls (δt).

17. Brennstoffzellensystem (1), umfassend eine oder mehrere Brennstoffzellen (10) und ein Kühlsystem (20) zum Kühlen der einen oder der mehreren Brennstoffzellen (10), wobei das Brennstoffzellensystem (1) ferner eine Steuereinheit (30) nach Anspruch 16 umfasst.

18. Fahrzeug (100), umfassend das Brennstoffzellensystem (1) nach Anspruch 17 und/oder das mit einer Steuereinheit (30) nach Anspruch 16 in Kommunikation steht.

19. Computerprogramm, umfassend Programmcodemittel zum Durchführen des Verfahrens nach einem der Ansprüche 1 bis 15, wenn das Programm auf einem Computer ausgeführt wird.

20. Computerlesbares Medium, das ein Computerprogramm trägt, umfassend Programmcodemittel zum Durchführen des Verfahrens nach einem der Ansprüche 1 bis 15, wenn das Programmprodukt auf einem Computer ausgeführt wird.

## Revendications

1. Procédé de contrôle d'un système de pile à combustible (1), le système de pile à combustible (1) comprenant une ou plusieurs piles à combustible (10) et un système de refroidissement (20), le procédé comprenant :
- *la prédiction* (S1) d'une demande de puissance future (P(t)) pour la distribution de puissance à partir du système de pile à combustible (1) au cours d'un horizon de prédiction futur (Δt),
- *la détection* (S2) que la demande de puissance future (P(t)) prédite remplit une condition prédéterminée de réduction de température de liquide de refroidissement, dans lequel la demande de puissance (P(t)) prédite doit être inférieure à une première limite de puissance inférieure prédéterminée (Pₘᵢₙ₁) à un ou plusieurs intervalles de temps instantanés (dt) au cours de l'horizon de prédiction futur (Δt) pour que la condition de réduction de température de liquide de refroidissement soit considérée comme remplie,
- *la détermination* (S3) d'au moins un intervalle de temps futur (δt) à l'intérieur de l'horizon de prédiction futur (Δt) au cours duquel la température de liquide de refroidissement doit être ajustée à une température de liquide de refroidissement réduite prédéterminable,
- *le contrôle* (S4) de la température de liquide de refroidissement à la température de liquide de refroidissement réduite pendant l'au moins un intervalle de temps futur (δt) déterminé.

2. Procédé selon la revendication 1, dans lequel une demande de puissance prédite moyenne (P_{avg}) sur l'horizon de prédiction futur (Δt) doit être supérieure à une limite de puissance admissible minimale prédéfinie (Pₘᵢₙ₀) du système de pile à combustible (1) pour que la condition de réduction de température de réfrigérant soit considérée comme remplie.

3. Procédé selon la revendication 1 ou 2, dans lequel la température de liquide de refroidissement réduite est inférieure à une température nominale de liquide de refroidissement mais supérieure ou égale à une température minimale de liquide de refroidissement associée à une limite de puissance admissible minimale prédéfinie (Pₘᵢₙ₀) du système de pile à combustible (1).

4. Procédé selon l'une quelconque des revendications précédentes, dans lequel la première limite de puissance inférieure (Pₘᵢₙ₁) est associée à une température nominale de liquide de refroidissement.

5. Procédé selon l'une quelconque des revendications précédentes, dans lequel l'au moins un intervalle de temps futur (δt) est déterminé comme comportant au moins le ou les intervalles de temps instantanés (dt).

6. Procédé selon l'une quelconque des revendications précédentes, dans lequel, lorsque la condition de réduction de température de liquide de refroidissement est remplie, et lorsque la demande de puissance prédite (P(t)) est supérieure ou égale à une seconde limite de puissance inférieure prédéterminée (Pₘᵢₙ₂) sur l'ensemble de l'horizon de prédiction (Δt), une durée agrégée de l'au moins un intervalle de temps futur (δt) est fixée à une première durée coïncidant avec une durée agrégée du ou des intervalles de temps instantanés (dt).

7. Procédé selon l'une quelconque des revendications précédentes, dans lequel, lorsque la condition de réduction de température de liquide de refroidissement est remplie, et lorsque la demande de puissance prédite (P(t)) est inférieure à une seconde limite de puissance inférieure prédéterminée (Pₘᵢₙ₂) au cours d'au moins un sous-intervalle (dt_{sub}) dudit ou desdits intervalles de temps instantanés (dt), une durée agrégée de l'au moins un intervalle de temps futur (δt) est fixée à une seconde durée dépassant une durée agrégée du ou des intervalles de temps instantanés (dt).

8. Procédé selon la revendication 7, dans lequel la seconde durée est déterminée en dépendance d'une relation entre une demande de puissance prédite moyenne (P_{avg}) sur l'horizon de prédiction futur (Δt) et au moins la première limite de puissance inférieure (Pₘᵢₙ₁).

9. Procédé selon la revendication 7 ou 8, dans lequel, lorsque la demande de puissance prédite moyenne (P_{avg}) sur l'horizon de prédiction futur (Δt) est supérieure ou égale à la première limite de puissance inférieure (Pₘᵢₙ₁), la seconde durée est fixée à moins de 80 % de l'horizon de prédiction futur (Δt), de préférence à moins de 70 %, plus préférablement à moins de 60 % de l'horizon de prédiction futur (Δt).

10. Procédé selon l'une quelconque des revendications 6 à 9, dans lequel la seconde limite de puissance inférieure (Pₘᵢₙ₂) est associée à la température de liquide de refroidissement réduite.

11. Procédé selon l'une quelconque des revendications 6 à 10 prises en dépendance de la revendication 2, dans lequel, lorsque la condition de réduction de température de liquide de refroidissement est remplie, et lorsqu'une demande de puissance prédite moyenne (P_{avg}) sur l'horizon de prédiction futur (Δt) est inférieure à la première limite de puissance inférieure (Pₘᵢₙ₁) mais supérieure ou égale à la seconde limite de puissance inférieure (Pₘᵢₙ₂), l'au moins un intervalle de temps futur (δt) est fixé pour inclure au moins 90 %, de préférence 100 %, de l'horizon de prédiction futur (Δt).

12. Procédé selon l'une quelconque des revendications précédentes, comprenant :
- en réponse à *la détection* du fait qu'une demande de puissance prédite moyenne (P_{avg}) sur l'horizon de prédiction futur (Δt) est inférieure à une limite de puissance minimale admissible prédéfinie (Pₘᵢ₀), *l'arrêt* du système de pile à combustible (1) au moins au cours de l'horizon de prédiction (Δt).

13. Procédé selon l'une quelconque des revendications précédentes, dans lequel, en réponse à la *détection* du fait que la demande de puissance prédite (P(t)) est supérieure ou égale à la première limite de puissance inférieure déterminée (Pₘᵢₙ₁) sur l'ensemble de l'horizon de prédiction futur (Δt), le procédé comprend le *contrôle* de la température de réfrigérant à une température nominale de réfrigérant.

14. Procédé selon l'une quelconque des revendications précédentes, dans lequel le système de pile à combustible (1) est adapté pour fournir de la puissance contribuant à la propulsion d'un véhicule (100), et dans lequel la *prédiction* de la demande de puissance future (P(t)) comprend :
- *la réception* d'informations relatives au véhicule comprenant au moins l'une parmi des informations de trafic pour un itinéraire de déplacement prévu du véhicule (100) au cours de l'horizon de prédiction futur (Δt), des informations de terrain pour l'itinéraire de déplacement prévu, des informations topographiques pour l'itinéraire de déplacement prévu au cours de l'horizon de prédiction futur (Δt), des informations météorologiques pour l'itinéraire de déplacement prévu au cours de l'horizon de prédiction futur (Δt), des informations de poids brut de véhicule,
- utiliser lesdites informations relatives au véhicule reçues pour *la prédiction* de la demande de puissance future (P(t)) au cours de l'horizon de prédiction futur (Δt).

15. Procédé selon l'une quelconque des revendications précédentes, dans lequel le système de pile à combustible (1) comprend en outre une batterie à laquelle la ou les piles à combustible (10) sont connectées électriquement, et dans lequel la prédiction de la demande de puissance future (P(t)) comprend :
- *la réception* d'informations de batterie indiquant au moins l'un parmi un état de charge actuel et une capacité de puissance prévue de la batterie au cours de l'horizon de prédiction futur (Δt),
- l'utilisation des informations de batterie reçues pour *la prédiction* de la demande de puissance future (P(t)) au cours de l'horizon de prédiction futur (Δt).

16. Unité de contrôle (30) permettant de contrôler le refroidissement d'un système de pile à combustible (1) comprenant une ou plusieurs piles à combustible (10) et un système de refroidissement (20) permettant de refroidir la ou les piles à combustible (10) pendant l'utilisation, l'unité de contrôle (30) étant adaptée pour :
- *prédire* une demande de puissance future (P(t)) pour la distribution de puissance à partir du système de pile à combustible (1) au cours d'un horizon de prédiction futur (Δt),
- *détecter* que la demande de puissance future (P(t)) prédite remplit une condition prédéterminée de réduction de température de liquide de refroidissement, dans lequel la demande de puissance (P(t)) prédite doit être inférieure à une première limite de puissance inférieure prédéterminée à un ou plusieurs intervalles de temps instantanés (dt) au cours de l'horizon de prédiction futur (Δt) pour que la condition de réduction de température de liquide de refroidissement soit considérée comme remplie,
- *déterminer* au moins un intervalle de temps futur (δt) à l'intérieur de l'horizon de prédiction futur (Δt) au cours lequel la température de liquide de refroidissement doit être ajustée à une température de liquide de refroidissement réduite prédéterminable,
- *contrôler* la température de liquide de refroidissement à la température de liquide de refroidissement réduite au cours de l'au moins un intervalle de temps futur (δt) déterminé.

17. Système de pile à combustible (1) comprenant une ou plusieurs piles à combustible (10) et un système de refroidissement (20) permettant de refroidir la ou les piles à combustible (10), dans lequel le système de carburant (1) comprend en outre une unité de contrôle (30) selon la revendication 16.

18. Véhicule (100) comprenant le système de pile à combustible (1) selon la revendication 17 et/ou étant en communication avec une unité de contrôle (30) selon la revendication 16.

19. Programme informatique comprenant un moyen de code de programme permettant de réaliser le procédé selon l'une quelconque des revendications 1 à 15, lorsque ledit programme est exécuté sur un ordinateur.

20. Support lisible par ordinateur contenant un programme informatique comprenant un moyen de code de programme permettant de réaliser le procédé selon l'une quelconque des revendications 1 à 15 lorsque ledit produit-programme est exécuté sur un ordinateur.
